# DEMANDE DE BREVET EUROPEEN

(11) **EP 0 780 584 A1**
(43) Date de publication de la demande: **25.06.1997**
(21) Numéro de dépôt: 96119861.1
(22) Date de dépôt: 11.12.1996
(51) Int. Cl.: F16B 21/12, F28F 9/02

(54) **Dispositif de fixation d'un échangeur de chaleur pour une installation de chauffage et/ou de climatisation de véhicule automobile**

(30) Priorité: 19.12.1995 FR 9515075
(71) Demandeur: VALEO CLIMATISATION, 78321 La Verrière (FR)
(72) Inventeur: Moynat, Pascale, 78990 Elancourt (FR)
(74) Mandataire: Gamonal, Didier

(57) **Abrégé**

L'invention concerne un dispositif de fixation d'un échangeur de chaleur dans un boîtier.

L'échangeur de chaleur (14) est introduit dans un logement (12) du boîtier (10) à la manière d'un tiroir et il est maintenu dans ce logement par une paire d'attaches homologues comprenant une patte (54) solidaire d'une boîte à fluide (16) de l'échangeur de chaleur (14) et une patte (56) solidaire du boîtier (10), cette patte étant munie de trous respectifs (60, 62) qui, lorsque l'échangeur de chaleur (14) est introduit complètement dans le logement (12), sont alignés dans une direction sensiblement perpendiculaire à la direction d'introduction (F) de l'échangeur de chaleur pour permettre la mise en place d'une broche (66).

Application aux échangeurs de chaleur pour véhicules automobiles.

## Description

L'invention concerne un dispositif de fixation d'un échangeur de chaleur dans un boîtier faisant partie d'une installation de chauffage et/ou de climatisation de l'habitacle d'un véhicule automobile.

Dans les dispositifs connus de ce type, le boîtier ménage un logement muni d'une ouverture pour l'introduction de l'échangeur de chaleur. Ainsi, l'échangeur de chaleur, qui comporte un faisceau et au moins une boîte à fluide, est introduit dans le logement par coulissement a la manière d'un tiroir. Par ailleurs, le boîtier comprend également une canalisation traversant le logement de l'échangeur de chaleur, de sorte que de l'air circulant dans cette canalisation passe à travers le faisceau de l'échangeur et peut y être chauffé ou refroidi.

Habituellement, l'échangeur de chaleur est fixé dans son logement du boîtier par vissage, grâce à des pattes dépendant d'une boîte à fluide de l'échangeur et présentant des trous de passage de vis de fixation ou analogues. Un tel assemblage par vissage est long et onéreux.

Il a été également proposé, dans le Brevet français No 78 36166, de fixer l'échangeur de chaleur dans son logement par clipsage, grâce à des pattes dépendant d'une boîte à fluide de l'échangeur. Toutefois, ces pattes sont fragiles et particulièrement exposées tant que l'échangeur de chaleur n'est pas monté en place dans le boîtier.

Dans une autre solution connue d'après le Brevet français No 81 11654, le boîtier comporte des pattes élastiquement déformables propres à coopérer par clipsage avec une partie d'extrémité de l'échangeur de chaleur. Toutefois, cette solution complique la réalisation du boîtier.

En outre, ces solutions connues ne permettent pas toujours un démontage rapide de l'échangeur de chaleur, en cas de réparation ou en cas de recyclage, lorsque celui-ci est en fin de vie.

L'invention a notamment pour but de surmonter les inconvénients précités en simplifiant et facilitant la fixation de l'échangeur de chaleur dans son logement du boîtier.

Elle a également pour but de proposer un dispositif de fixation qui facilite le démontage de l'échangeur, notamment dans un but de recyclage lorsqu'il est arrivé en fin de vie.

Elle propose à cet effet un dispositif de fixation du type défini en introduction, lequel comprend au moins une paire d'attaches homologues dont l'une est solidaire d'une boîte à fluide de l'échangeur de chaleur et l'autre est solidaire du boîtier, lesdites attaches étant munies de trous respectifs qui, lorsque l'échangeur est introduit complètement dans le logement, sont alignés dans une direction sensiblement perpendiculaire à la direction d'introduction de l'échangeur de chaleur, ce qui permet la mise en place d'une broche traversant les trous alignés, afin d'immobiliser l'échangeur de chaleur.

Ainsi, la fixation de l'échangeur de chaleur s'effectue de manière très simple par mise en place d'une broche ou analogue au travers des trous respectifs des attaches. L'introduction de la broche ne peut se faire que si les trous sont alignés, c'est-à-dire lorsque l'échangeur de chaleur est introduit complètement dans le logement.

De plus, le démontage de l'échangeur de chaleur, à des fins de réparations ou de recyclage, s'effectue d'une manière très simple par enlèvement de la broche.

Dans une forme de réalisation préférée de l'invention, l'une au moins des attaches est une patte qui s'étend dans une direction sensiblement parallèle à la direction d'introduction de l'échangeur de chaleur.

De préférence, l'une des pattes est une patte simple et l'autre patte est une patte double formée de deux pattes parallèles entre elles qui définissent entre elles un intervalle de réception de la patte simple.

Avantageusement, la patte simple est solidaire de la boîte à fluide, tandis que la patte double est solidaire du boîtier. Toutefois, une disposition inverse peut être envisagée.

De préférence, l'attache solidaire de la boîte à fluide est formée sur un bord, de préférence un bord longitudinal, d'une plaque d'appui propre à être rendue solidaire de la boîte à fluide.

Dans une forme de réalisation préférée de l'invention, cette plaque d'appui est réalisée d'une seule pièce avec une paroi sommitale de la boîte à fluide.

En variante, cette plaque d'appui peut être réalisée sous la forme d'un couvercle indépendant propre à venir en appui contre une paroi sommitale de la boîte à fluide.

Selon une autre caractéristique de l'invention, cette plaque d'appui est propre à reposer contre un rebord périphérique formé en saillie vers l'extérieur du boîtier et entourant l'ouverture du logement, l'attache solidaire du boîtier étant située à l'opposé de l'ouverture par rapport au rebord périphérique.

De façon avantageuse, ce rebord périphérique est solidaire d'une paroi latérale du boîtier, dans laquelle est pratiquée l'ouverture du logement, et l'attache du boîtier est formée à la jonction de cette paroi latérale et du rebord périphérique.

Dans la description qui suit, faite à titre d'exemple, on se réfère au dessin annexé, sur lequel :
- la figure 1 est une vue partielle en coupe transversale d'un boîtier d'une installation de chauffage et/ou de climatisation de l'habitacle d'un véhicule automobile, dans lequel est fixé un échangeur de chaleur au moyen d'un dispositif de fixation selon l'invention;
- la figure 2 est une vue de dessus correspondant à la figure 1;
- la figure 3 est une vue en coupe partielle selon la ligne III-III de la figure 1; et
- la figure 4 est une vue partielle en coupe, analogue à celle de la figure 3, avant introduction complète de l'échangeur de chaleur dans le boîtier.

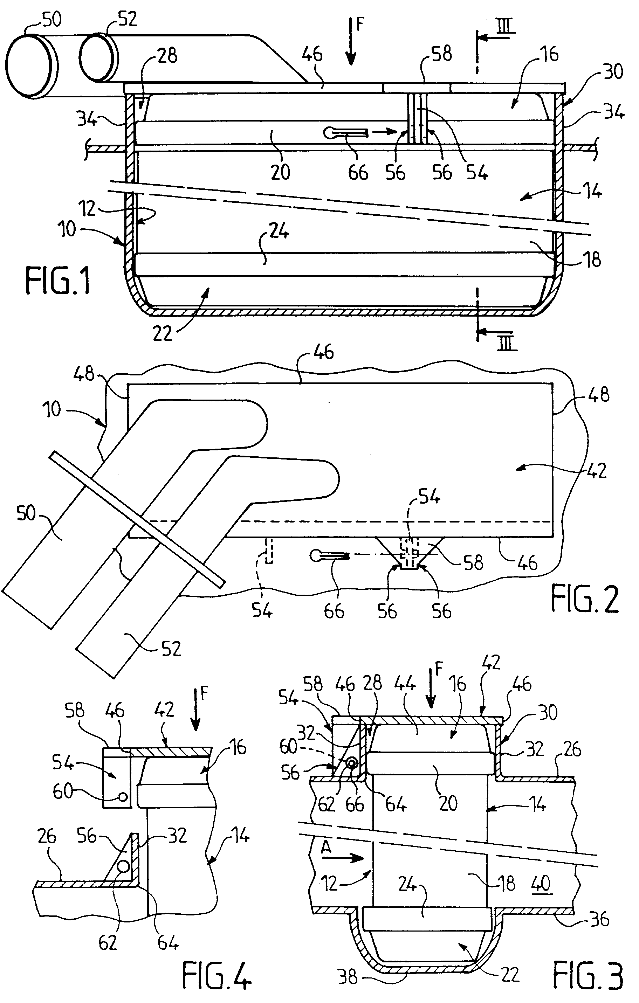

On se réfère tout d'abord à la figure 1 qui montre une partie d'un boîtier 10 d'une installation de chauffage et/ou de climatisation de l'habitacle d'un véhicule automobile. Le boîtier 10, réalisé en matière plastique moulée, délimite un logement 12 (figures 1 et 3) destiné à recevoir un échangeur de chaleur 14 par introduction, à la manière d'un tiroir, dans la direction de la flèche F.

L'échangeur de chaleur 14 (figures 1 et 3) comprend une première boîte à fluide 16 raccordée à un faisceau 18 par l'intermédiaire d'une plaque collectrice 20 et une seconde boîte à fluide 22 raccordée au faisceau 18 par l'intermédiaire d'une plaque collectrice 24. Le faisceau 18 est composé d'une multiplicité de tubes et d'ailettes (non représentés).

Le boîtier 10 comprend une paroi latérale 26, dans l'exemple une paroi supérieure, dans laquelle est ménagée une ouverture 28 (figures 1 et 3) de forme générale rectangulaire pour l'introduction de l'échangeur de chaleur 14 dans le logement 12. Cette ouverture 28 est entourée par un rebord périphérique 30 (figures 1 et 3) qui se rattache perpendiculairement à la paroi 26, du côté extérieur de celle-ci. Le rebord 30 est venu de moulage avec la paroi 26 et comporte deux parties longitudinales 32 parallèles entre elles (figure 3) et deux parties transversales 34 parallèles entre elles (figure 1).

Le boîtier 10 comprend en outre une paroi latérale opposée 36 (figures 1 et 3), dans l'exemple une paroi inférieure, dans laquelle est ménagé un fond 38 propre à loger la boîte à fluide 22. Les parois 26 et 36 délimitent entre elles une canalisation 40 pour le passage d'un flux d'air A qui traverse le faisceau 18 (figure 3).

L'échangeur de chaleur 14 comporte une plaque d'appui 42 de forme générale rectangulaire qui, dans l'exemple de réalisation représenté, est réalisée d'une seule pièce avec la boîte à fluide 16 et est rattachée à une paroi sommitale 44 de cette dernière.

La plaque d'appui 42 est délimitée par deux bords longitudinaux opposés 46 et deux bords transversaux opposés 48 (figure 2). En outre, elle supporte deux tubulures 50 et 52 servant à l'entrée et la sortie d'un fluide caloporteur destiné à parcourir l'échangeur de chaleur 14. La plaque d'appui 42 est destinée à venir reposer en appui contre le rebord 30 lorsque l'échangeur de chaleur 14 est introduit complètement dans le logement 12.

Pour assurer l'immobilisation de l'échangeur de chaleur dans la position ainsi obtenue, l'invention prévoit une paire d'attaches homologues qui comprennent une patte de fixation 54 solidaire de la boite à fluide 16 et une patte de fixation 56 solidaire du boîtier 10.

La patte 54 est une patte simple de forme générale rectangulaire (figure 4) qui s'étend parallèlement à la direction d'introduction de l'échangeur de chaleur. Elle présente un plan qui est généralement perpendiculaire aux bords longitudinaux 46 de la plaque 42 (figure 4). Cette patte 54 est formée d'une seule pièce avec la boîte à fluide 16. Elle se rattache à la plaque d'appui 42 par l'intermédiaire d'une embrasse 58 de forme générale triangulaire qui s'étend dans le plan de la plaque 42 et qui fait saillie à partir de l'un des bords longitudinaux 46.

La patte simple 54 est pourvue d'un trou traversant 60 dont l'axe est parallèle aux bords longitudinaux 46 de la plaque d'appui 42.

L'attache 56 est réalisée sous la forme d'une double patte (figure 1) comprenant deux pattes de forme générale triangulaire (figures 3 et 4) située à la jonction de la paroi 26 et d'une portion longitudinale 32 du rebord 30.

Les deux pattes 56 s'étendent parallèlement entre elles et à la direction d'introduction de l'échangeur de chaleur (flèche F) et elles ménagent entre elles un intervalle dont la largeur est légèrement supérieure à l'épaisseur de la patte 54. Par ailleurs, les deux pattes 56 comportent chacune un trou traversant 62, les deux trous étant alignés dans une direction parallèle à celle de l'arête 64 qui relie la portion longitudinale 32 et la paroi latérale 26 du boîtier 10.

Pour assurer la fixation de l'échangeur de chaleur 14, on introduit tout d'abord celui-ci dans son logement 12 dans la direction de la flèche F (figure 4). Au cours du mouvement d'introduction, la patte de fixation 54 se rapproche de la double patte de fixation 56 et, en fin de course, vient se loger dans l'intervalle ménagé par la double patte 56.

En fin d'introduction, l'échangeur de chaleur se trouve correctement positionné dans le logement 12 et il suffit alors de passer une broche 66 au travers des deux trous 62 et du trou 60, lesquels se trouvent alignés dans une direction généralement perpendiculaire à la direction d'introduction. Cette broche peut être une tige ou analogue.

Il en résulte que l'échangeur de chaleur est parfaitement immobilisé dans son logement, la plaque d'appui 42 venant reposer contre le rebord 30.

Dans une variante de réalisation, il serait possible de rattacher la simple patte de fixation à la paroi 26, comme indiqué en trait interrompu avec la référence 54' sur la figure 2. En pareil cas, la double patte serait rendue dépendante de la plaque d'appui 42.

Généralement, une seule paire d'attaches est suffisante pour assurer la fixation de l'échangeur de chaleur. Toutefois, il est possible de prévoir une autre paire d'attaches, de préférence de l'autre côté de l'ouverture 28.

Dans une autre forme de réalisation (non représentée), la plaque d'appui 42 peut être réalisée sous la forme d'un couvercle indépendant propre à venir prendre appui sur la paroi sommitale 44 de la boîte à fluide 16 et sur le rebord 30.

En pareil cas, il est préférable de prévoir deux paires d'attaches, de part et d'autre de l'ouverture.

Bien entendu, l'invention n'est pas limitée aux formes de réalisation décrites précédemment, notamment en ce qui concerne la structure des attaches.

L'invention s'applique tout particulièrement à la fixation d'un échangeur de chaleur, tel qu'un radiateur de chauffage ou un évaporateur de climatisation, pour un habitacle de véhicule automobile.

## Revendications

1. Dispositif de fixation d'un échangeur de chaleur dans un boîtier ménageant un logement muni d'une ouverture pour l'introduction de l'échangeur de chaleur à la manière d'un tiroir,
caractérisé en ce qu'il comprend au moins une paire d'attaches homologues, dont l'une (54) est solidaire d'une boîte à fluide (16) de l'échangeur de chaleur (14) et l'autre (56) est solidaire du boîtier (10), lesdites attaches étant munies de trous respectifs (60, 62) qui, lorsque l'échangeur de chaleur (14) est introduit complètement dans le logement (12), sont alignées dans une direction sensiblement perpendiculaire à la direction d'introduction (F) de l'échangeur de chaleur (14), ce qui permet la mise en place d'une broche (66) au travers des trous alignés (60, 62), afin d'immobiliser l'échangeur de chaleur (14).

2. Dispositif selon la revendication 1, caractérisé en ce que l'une au moins des attaches (54, 56) est une patte qui s'étend dans une direction sensiblement parallèle à la direction d'introduction (F) de l'échangeur de chaleur (14).

3. Dispositif selon la revendication 2, caractérisé en ce que l'une (54) des pattes est une patte simple et l'autre (56) est une patte double formée de deux pattes parallèles entre elles qui définissent entre elles un intervalle de réception de la patte simple (54).

4. Dispositif selon la revendication 3, caractérisé en ce que la patte simple (54) est solidaire de la boîte à fluide (16) et en ce que la patte double (56) est solidaire du boîtier (10).

5. Dispositif selon l'une des revendications 1 à 4, caractérisé en ce que l'attache (54) solidaire de la boîte à fluide (16) est formée sur un bord (46), de préférence un bord longitudinal, d'une plaque d'appui (42) propre à être rendue solidaire de la boîte à fluide (16).

6. Dispositif selon la revendication 5, caractérisé en ce que la plaque d'appui (42) est réalisée d'une seule pièce avec une paroi sommitale (44) de la boîte à fluide (16).

7. Dispositif selon la revendication 5, caractérisé en ce que la plaque d'appui (42) est réalisée sous la forme d'un couvercle indépendant propre à venir en appui contre une paroi sommitale (44) de la boîte à fluide (16).

8. Dispositif selon l'une des revendications 5 à 7, caractérisé en ce que la plaque d'appui (42) est propre à reposer en appui contre un rebord périphérique (30) formé en saillie vers l'extérieur du boîtier (10) et entourant l'ouverture (28) du logement (12), et en ce que l'attache (56) solidaire du boîtier est située à l'opposé de l'ouverture (28) par rapport au rebord périphérique (30).

9. Dispositif selon l'une des revendications 1 à 8, caractérisé en ce que le rebord périphérique (30) est solidaire d'une paroi latérale (26) du boîtier (10), dans laquelle est pratiquée l'ouverture (28) du logement, et en ce que l'attache (56) solidaire du boîtier est formée à la jonction de la paroi latérale (26) et du rebord périphérique (30).
